# EUROPÄISCHE PATENTSCHRIFT

(11) **EP 2 354 172 B1**
(45) Veröffentlichungstag und Bekanntmachung des Hinweises auf die Patenterteilung: **21.11.2012**
(21) Anmeldenummer: 10152965.9
(22) Anmeldetag: 08.02.2010
(51) Int. Cl.: C08G 18/02, C08G 18/18, C08G 18/70, C08G 18/79, C08L 27/06, C09D 127/06

(54) **Phthalatfreie Isocyanuratzubereitungen**
Phthalate-free isocyanurate preparations
Préparations d'isocyanurate sans phtalate

(43) Veröffentlichungstag der Anmeldung: 10.08.2011
(73) Patentinhaber: LANXESS Deutschland GmbH, 51369 Leverkusen (DE); Bayer MaterialScience AG, 51368 Leverkusen (DE)
(72) Erfinder: Augustin, Thomas, 51065 Köln (DE); Sanders, Josef, 51375 Leverkusen (DE)
(74) Vertreter: Wichmann, Birgid

(56) Entgegenhaltungen:
- WO-A1-2005/070984
- US-A- 4 518 729

## Beschreibung

Die vorliegende Erfindung betrifft neue monomerenarme, niedrigviskose Zubereitungen aus isocyanatgruppenhaltigen Isocyanuraten und phthalatfreien Weichmachern, ihre Verwendung als Haftvermittler für Beschichtungsmittel auf Basis von weichgemachtem Polyvinylchlorid (PVC), sowie Beschichtungen und beschichtete Substrate.

Es ist bekannt, die Haftfähigkeit von weichgemachtem PVC auf Substraten dadurch zu verbessern, dass dem weichgemachten PVC ein isocyanatgruppenhaltiger Haftvermittler zugesetzt wird. Eine derart verbesserte Haftfähigkeit ist beispielsweise wichtig, wenn mit einem PVC-Belag versehene synthetische Textilstoffe hergestellt werden sollen. Als Haftvermittler werden bevorzugt isocyanatgruppenhaltige Isocyanurate eingesetzt, die sich durch Oligomerisierung, insbesondere Trimerisierung, aus Diisocyanaten herstellen lassen. Die hierfür am besten geeigneten Diisocyanate sind die kommerziell gut verfügbaren Mischungen der isomeren Diisocyanatotoluole (TDI), bestehend hauptsächlich aus 2,4-Diisocyanatotoluol (2,4-TDI) und 2,6-Diiso-cyanatotoluol (2,6-TDI). Diese lassen sich auf einfache Weise nahezu vollständig in isocyanatgruppenhaltige Isocyanurate umsetzen. Der nahezu vollständige Umsatz ist aus Gründen der Arbeits- und Produktsicherheit erforderlich, weshalb man den Restgehalt an Diisocyanaten in der Haftvermittler-Zubereitung unter 1,0 Gew.-%, bevorzugt unter 0,5 Gew.-% hält. Weniger geeignet sind die ebenfalls gut verfügbaren Diisocyanatodiphenylmethane (MDI), die sich im Vergleich mit TDI schlechter trimerisieren lassen und so zu einem unerwünscht hohen Restgehalt an Diisocyanaten führen können. Darüber hinaus zeigen isocyanatgruppenhaltige Isocyanurate auf Basis von MDI eine schlechte Löslichkeit und neigen zur Kristallisation.

Isocyanatgruppenhaltige Isocyanurate lassen sich als Haftvermittler vor allem dann einfach handhaben, wenn sie in Form einer Lösung in einem Weichmacher angewendet werden. Die Herstellung der isocyanatgruppenhaltigen Isocyanurate aus TDI wird praktischer Weise ebenfalls in dem als Lösungsmittel verwendeten Weichmacher durchgeführt. Derartige Haftvermittler und weichmacherhaltige Haftvermittler-Zubereitungen, ihre Herstellung und ihre Anwendung sind beispielsweise in DE 24 19 016 A1 (GB 1 455 701 A) beschrieben.

Weichmacher im Sinne der vorliegenden Erfindung sind Stoffe, die beim Mischen mit dem an sich harten und spröden PVC einen weichen, zähen Werkstoff ergeben, das so genannte weichgemachte PVC. Bekannte Weichmacher sind beispielsweise die Ester der Phthalsäure, Adipinsäure oder Benzoesäure. In weichgemachtem PVC können diese Weichmacher in großen Mengen enthalten sein, teilweise über 50 Gew.-% des weichgemachten PVC. Der Weichmacher kann sich unter Gebrauchsbedingungen oberflächlich absondern oder in benachbarte Materialien übergehen. Bei der Verwendung von weichgemachtem PVC besteht daher die Gefahr einer Kontamination von Mensch und Umwelt mit dem Weichmacher. Vor dem Hintergrund dieser Problematik wird in letzter Zeit vermehrt von den verwendeten Weichmachern gefordert, dass sie für den Menschen harmlos und nicht bioakkumulierend sind.

Nach der in der Europäischen Union gültigen Richtlinie 2005/84/EG dürfen beispielsweise die Weichmacher Di(2-ethylhexyl)phthalat, Dibutylphthalat und Benzylbutylphthalat nicht mehr in Spielzeug oder Babyartikeln verwendet werden und die Weichmacher Diisononylphthalat, Diisodecylphthalat und Di-n-octylphthalat nicht mehr in Spielzeug oder Babyartikeln, die von Kindern in den Mund genommen können, verwendet werden. Angesichts dieser Einschränkungen, die für manche Konsumenten als unübersichtlich und verunsichernd erscheinen können, gehen viele Hersteller dazu über, bei der Herstellung von weichgemachtem PVC generell auf alle phthalathaltigen Weichmacher zu verzichten. Daher besteht ein Bedarf an phthalatfreien Weichmachern, die hinsichtlich Verarbeitbarkeit und Nutzeigenschaften das Leistungsniveau von phthalathaltigen Weichmachern erreichen.

Als phthalatfreie Weichmacher werden im Zusammenhang mit der vorliegenden Erfindung solche Weichmacher bezeichnet, die keine Phthalsäuredialkylester enthalten, insbesondere Weichmacher, die weniger als 0,1 Gew.-% Phthalsäuredialkylester enthalten.

Der Verzicht auf phthalathaltige Weichmacher wird nun auch von weichmacherhaltigen Haftvermittler-Zubereitungen gefordert, insbesondere für sensible Anwendungen wie Spielzeug oder Babyartikel. Es besteht daher ein großer Bedarf an Haftvermittler-Zubereitungen, die keine Phthalate enthalten, aber dennoch die guten Haftungseigenschaften phthalathaltiger Haftvermittler-Zubereitungen aus dem Stand der Technik aufweisen. Weiterhin wird gefordert, dass die Zubereitungen klar und frei von Feststoffen sind, keine flüchtigen Lösungsmittel enthalten und für eine gute Verarbeitbarkeit eine Viskosität bei 23°C von kleiner als 30.000 mPas, bevorzugt kleiner 20.000 mPas aufweisen. Der Restgehalt an Diisocyanaten soll weniger als 1,0 Gew.-%, bevorzugt weniger als 0,5 Gew.-% betragen. Eine Kombination aller dieser Produkteigenschaften ist im Stand der Technik bisher nicht beschrieben, so auch nicht in DE 10 2007 034 977 A1.

So sind die in WO 2005 70984 A1 beschriebenen Haftvermittler-Zubereitungen auf Basis von Diisononylphthalat für sensible Anwendungen nicht mehr geeignet. In DE 25 51 634 A1 und EP 1 378 529 A1 wird behauptet, als Haftvermittler geeignete isocyanatgruppenhaltige Isocyanurate auf Basis von TDI lassen sich in beliebigen Lösungsmitteln, darunter auch in phthalatfreien Weichmachern, herstellen. Die unten angeführten Vergleichsbeispiele zeigen jedoch, dass keineswegs alle phthalatfreien Weichmacher zu Haftvermittler-Zubereitungen führen, die die beschriebenen Anforderungen erfüllen. Dies gilt auch für die in DE 10 2007 034 977 beschriebenen Weichmacher auf Basis von Alkylsulfonsäureester des Phenols (ASE), die unter dem Handelsnamen Mesamoll^{®} vertrieben werden. DE 30 41 732 A1 beschreibt als Haftvermittler geeignete Lösungen von isocyanatgruppenhaltigen Isocyanuraten, die allerdings aus MDI hergestellt werden. Diese Lösungen sind aus den oben genannten Gründen ungeeignet.

Aufgabe der vorliegenden Erfindung war es daher, als Haftvermittler geeignete Zubereitungen von isocyanatgruppenhaltigen Isocyanuraten zur Verfügung zu stellen, die zwar phthalatfreie Weichmacher enthalten, aber in ihren mechanischen Eigenschaften, wie z. B. Haftfestigkeiten, das Niveau der phthalathaltigen Haftvermittler-Zubereitungen aus WO 2005 70984 A1 erreichen. Die isocyanatgruppenhaltigen Isocyanurate sollen auf großtechnisch verfügbaren Isomerenmischungen des TDI basieren, insbesondere soll die Verwendung von reinem 2,4-TDI aus wirtschaftlichen Gründen vermieden werden. Die Zubereitungen sollen klar sein, ihre Viskosität soll bei 23°C < 30.000 mPas, bevorzugt < 20.000 mPas und der Gehalt an freiem TDI (alle Isomere) soll < 1,0 Gew.-%, bevorzugt< 0,5 Gew.-% betragen.

Lösung der Aufgabe und somit Gegenstand der vorliegenden Erfindung sind Zubereitungen, dadurch gekennzeichnet, dass sie A) 15 bis 50 Gew.-% isocyanatgruppenhaltige Isocyanurate, B) 85 bis 50 Gew.-% n- oder iso-Alkylbenzoate und C) 0,01 bis 2 Gew.-% Mannich-Basen enthalten.

In einer bevorzugten Ausführungsform der Erfindung enthalten die Zubereitungen 20 bis 35 Gew. % isocyanatgruppenhaltige Isocyanurate und 80 bis 65 Gew.-% n- oder iso-Nonylbenzoate.

Zur Herstellung der Komponente A) werden großtechnisch verfügbare Gemische bestehend im Wesentlichen aus 2,4-TDI und 2,6-TDI verwendet. Die Gemische sind Mischungen isomerer Diisocyanatotoluole enthaltend 65 bis 95 Gew.-% 2,4-Diisocyanatotoluol und 5 bis 35 Gew.-% 2,6-Diisocyanatotoluol und werden unter Katalyse durch Dialkylaminogruppen enthaltende phenolische Katalysatoren in Abwesenheit aliphatischer Hydroxyl- und/oder Urethangruppen hergestellt. Bevorzugt enthalten die TDI-Isomerenmischungen 75 bis 85 Gew.-% 2,4-TDI im Gemisch mit 15 bis 25 Gew.-% 2,6-TDI. Ein Beispiel für diese bevorzugt zu verwendenden TDI-Isomerenmischungen ist das kommerziell von der Bayer Material Science AG erhältliche Produkt Desmodur® T80.

Zur Herstellung der Komponente A) kommen Mannich-Basen als Katalysatoren C) zur Initiierung und Beschleunigung der Trimerisationsreaktion spezielle Systeme in Betracht, die auch bei höheren Temperaturen zu einem selektiven Einbau von TDI führen. Solche Katalysatorsysteme weisen an Aromaten gebundene N,N-Dialkylaminomethylgruppen und phenolische OH-Gruppen auf (Alkyl: C1-C3-Alkylkette und/oder Alkylenkette mit 1 bis 18 Kohlenstoffatomen, die gegebenenfalls durch Sauerstoff oder Schwefel getrennt sind).

Diese Gruppen können auf mehrere Moleküle verteilt, oder an einem oder mehreren Aromatenringen positioniert sein. Vorzugweise werden Verbindungen als Katalysatorsysteme eingesetzt, die sowohl Hydroxyl- als auch Aminomethylgruppen in einem Molekül enthalten.

Besonders bevorzugt werden Systeme eingesetzt, deren C1-C3-Dialkylaminomethylgruppen in ortho-Stellung zu aromatischen Hydroxylgruppen positioniert sind.

Die Synthese von als Katalysatoren geeigneten Mannich-Basen ist beispielsweise in DE 25 51 634 A1 und WO 2005 70984 A1 beschrieben. Bevorzugt einzusetzende Mannich-Basen sind solche auf Basis von Phenol, p-Isononylphenol oder Bisphenol A, die durch Umsetzung mit Dimethylamin und Formaldehyd z.B. nach der DE-A 2 452 531 oder Synth.Commun. (1986), 16, 1401-9 erhalten werden. Insbesondere bevorzugt sind Mannich-Basen auf Basis Phenol oder Bisphenol A.

Die als Mannich-Basen einzusetzenden Katalysatoren C) werden als Reinsubstanz oder gelöst, bevorzugt in mehreren kleinen Portionen oder kontinuierlich eingesetzt.

Die Herstellung der Komponente A) geschieht durch Trimerisierung der Diisocyanatmischungen nach bekannten Verfahren, wie sie beispielsweise in WO 2005 70984 A1 beschrieben sind.

Die Trimerisierung wird in Gegenwart der Weichmacherkomponente B) durchgeführt. Die Trimerisierungsreaktion erfolgt im Temperaturbereich von 40 bis 140°C, vorzugsweise 40 bis 80°C. Wenn der Gehalt an freiem TDI in der Reaktionsmischung unter 1,0 Gew.-%, bevorzugt unter 0,5 Gew.-% liegt, wird die Trimerisierung durch thermische Zersetzung des Katalysators oder aber bevorzugt durch Zugabe eines Katalysatorengifts abgebrochen. Das Produkt enthält dann 3 bis 7 Gew.-% , vorzugsweise 4,5 bis 6 % Isocyanatgruppen

Bevorzugt wird die Trimerisationsreaktion am Ende durch Zugabe wenigstens eines Katalysatorgiftes abgestoppt. Bevorzugt werden dafür Katalysatorgifte aus der Reihe der Protonensäuren, Säurechloride oder methylierenden Verbindungen eingesetzt. Besonders bevorzugt werden methylierende Verbindungen als Katalysatorgifte eingesetzt, insbesondere bevorzugt Toluolsulfonsäuremethylester. Die erfindungsgemäßen Zubereitungen enthalten das oder die Katalysatorgift(e) zu 0,02 bis 4 Gew.-%, bevorzugt zu 0,1 bis 2 Gew.-%, besonders bevorzugt zu 0,2 bis 1 Gew.-%.

Das als Weichmacher in der Zubereitung einzusetzende n- oder iso-Alkylbenzoat der Komponente B) enthält erfindungsgemäß bevorzugt < 0,1 Gew.-% Phthalsäuredialkylester und > 0,1% n- oder iso-Alkylbenzoat. Die n- oder iso Alkylbenzoate können hergestellt werden durch die Veresterung von Benzoesäure mit monofunktionalen linearen oder verzweigten Alkylalkoholen, bevorzugt C7-bis C 10- Alkoholen.

In einer besonders bevorzugten Ausführungsform der Erfindung werden als Komponente B) mehr als > 90 Gew.-% n- oder iso-Nonylbenzoat eingesetzt. Die zur Synthese erforderlichen C9-Alkohole sind bevorzugt Nananole der Reihe n-Nonanol, Methyl-isopropyl-pentanol, Methyl-propyl-pentanol, Trimethylhexanol, Ethyl-methyl-hexanol, Propylhexanol, Dimethylheptanol, Ethylheptanol, Methyloctanol.

Besonders bevorzugt ist als Komponente B) eine Mischung von n- und iso-Nonanolbenzoaten, dadurch gekennzeichnet, dass nur ein geringer Anteil von 3,5,5,- Trimethylhexanol-Benzoat enthalten ist.

Ganz besonders bevorzugt ist als Komponente B) eine Mischung von n- und iso-Nonanolbenzoaten, dadurch gekennzeichnet, dass ein Anteil von kleiner 10 Mol % 3,5,5- Trimethylhexanol-Benzoat enthalten ist.

In einer bevorzugten Ausführungsform betrifft die vorliegende Erfindung Zubereitungen, dadurch gekennzeichnet, dass diese
A) 15 bis 50 Gew.-% isocyanatgruppenhaltige Isocyanurate
B) 85 bis 50 Gew.-% n- oder iso-C7-C10-Alkylbenzoate und
C) 0,05 bis 1 Gew.-% Mannich-Basen
enthalten.

In einer besonders bevorzugten Ausführungsform betrifft die vorliegende Erfindung Zubereitungen, dadurch gekennzeichnet, dass diese
A) 15 bis 50 Gew.-% isocyanatgruppenhaltige Isocyanurate
B) 85 bis 50 Gew.-% n- oder iso-Nonylbenzoat und
C) 0,1 bis 0,5 Gew.-% Mannich-Basen
enthalten.

In einer weiteren bevorzugten Ausführungsform betrifft die vorliegende Erfindung Zubereitungen, dadurch gekennzeichnet, dass diese
A) 15 bis 50 Gew.-% isocyanatgruppenhaltige Isocyanurate
B) 85 bis 50 Gew.-% n- oder iso-C7―C10 0 Alkylbenzoate,
C) 0,01 bis 2 Gew.-% Mannich-Basen und
D) 0,01 bis 2 Gew.-% Katalysatorgift
enthalten.

Zur Klarstellung sei angemerkt, dass vom Rahmen dieser Erfindung alle in der vorliegenden Offenbarung aufgeführten, allgemeinen oder in Vorzugsbereichen genannten Definitionen und Parameter in beliebigen Kombinationen umfasst sind.

Die erfindungsgemäßen Zubereitungen sind klare, leicht gelbliche bis gelbliche Flüssigkeiten mit überraschender Lagerstabilität, die auch nach mehrwöchiger Lagerung weder zur Kristallisation noch zur Bildung von Ausfällungen oder Phasentrennung neigen. Außerdem zeichnen sie sich auch nach Lagerung durch einen äußerst geringen Gehalt an freiem TDI aus, was wegen des relativ niedrigen Siedepunktes dieses toxikologisch bedenklichen Diisocyanats ein besonderer Vorteil der erfindungsgemäßen Zubereitungen ist.

Da als Haftvermittler geeignete Zubereitungen isocyanatgruppenhaltiger Isocyanurate nach dem Stand der Technik am besten durch Trimerisation von Diisocyanaten im Weichmacher hergestellt werden und der Verlauf der Trimerisierungsreaktion nicht nur vom Katalysator, sondern auch beispielsweise durch den eingesetzten Weichmacher, die Isomerenzusammensetzung des TDI oder gleichzeitig anwesende beispielsweise hydroxylgruppenhaltige Verbindungen beeinflusst wird, war es nicht zu erwarten, dass gerade die erfindungs-wesentliche Kombination von Weichmacher, Katalysator und Höchstmenge an 2,6-TDI bei gleichzeitiger Abwesenheit von Hydroxyverbindungen Haftvermittler-Zubereitungen mit den geforderten Eigenschaften liefern würde. Tatsächlich zeigen die unten angeführten Vergleichsbeispiele 1 bis 6, dass die dieser Erfindung zugrunde liegende Aufgabe nicht mit beliebigen phthalatfreien Weichmachern zu lösen ist.

Die vorliegende Erfindung betrifft aber auch ein Verfahren zur Herstellung der erfindungsgemäßen Zubereitungen, dadurch gekennzeichnet, dass man die Trimerisierung der Komponente A) in Gegenwart der Weichmacherkomponente B) und in Anwesenheit wenigstens einer als Katalysator fungierenden Mannich-Base im Temperaturbereich von 40 bis 140°C, vorzugsweise 40 bis 80°C.durchfüht und sobald der Gehalt an freiem TDI in der Reaktionsmischung unter 1,0 Gew.-%, bevorzugt unter 0,5 Gew.-% liegt, die Trimerisierung durch thermische Zersetzung des Katalysators oder durch Zugabe eines Katalysatorengifts abgebrochen wird. Erfindungsgemäß bevorzugt ist der Einsatz eines Katalysatorgiftes zur Beendigung der Trimerisierung. Durch das erfindungsgemäße Verfahren erhält man bevorzugt erfindungsgemäße Zubereitungen, die dann 3 bis 7 Gew.-%, vorzugsweise 4,5 bis 6 %, Isocyanatgruppen enthalten.

Die erfindungsgemäßen Zubereitungen eignen sich als Haftvermittler für weichgemachtes PVC und insbesondere als haftvermittelnde Zusätze für PVC-Plastisole. Besonders vorteilhaft werden die erfindungsgemäßen Zubereitungen als Haftvermittler zwischen Substraten aus Chemiefasern mit gegenüber Isocyanat-gruppen reaktionsfähigen Gruppen, wie z. B. Polyamid- oder Polyesterfasern, und PVC-Plastisolen bzw. Weich-PVC-Schmelzen verwendet. Selbstverständlich kann mit den erfindungsgemäßen Lösungen auch die Haftung von weichgemachtem PVC bzw. PVC-Plastisolen an flächigen Substraten, wie beispielsweise an Folien, verbessert werden.

Daher ist ein weiterer Gegenstand der vorliegenden Erfindung die Verwendung der erfindungsgemäßen Zubereitungen als Haftvermittler für Beschichtungsmittel auf Basis von weichgemachtem PVC.

Bei der erfindungsgemäßen Verwendung der erfindungsgemäßen Zubereitungen kann beispielsweise so vorgegangen werden, dass die erfindungsgemäßen Zubereitungen auf die zu beschichtenden Substrate gedruckt, gerakelt, gerastert oder gesprüht oder durch Tauchen aufgebracht werden. Je nach herzustellendem Artikel werden auf die so vorbehandelten Substratoberflächen eine oder mehrere haftvermittlerfreie PVC-Schichten, z. B. als Plastisole oder durch Extrusions- oder Schmelzwalzenbeschichtung oder durch Laminierung, aufgebracht. Besonders bevorzugt können die erfindungsgemäßen Zubereitungen auch einem PVC-Plastisol vor dessen Applikation zugesetzt werden.

Die erfindungsgemäßen Zubereitungen werden normalerweise in solchen Mengen eingesetzt, dass, bezogen auf weichmacherfreies PVC der Beschichtungsmasse, 0,5 bis 200 Gew.-%, vorzugsweise 2 bis 30 Gew.-% isocyanatgruppenhaltige Isocyanurate vorliegen. Die erfindungsgemäßen Lösungen können jedoch auch in beliebigen anderen, dem jeweiligen Anwendungsgebiet angepassten Mengen eingesetzt werden.

Die Herstellung der fertigen Schichten, also die Reaktion der Isocyanatgruppen des Haftvermittlers mit dem Substrat und die Gelierung der PVC-Schicht, erfolgt unabhängig von der Art des Auftrags in üblicher Weise bei höheren Temperaturen, wobei je nach Zusammensetzung der PVC-Schichten Temperaturen zwischen 110 und 210°C angewandt werden.

Ein weiterer Gegenstand der vorliegenden Erfindung sind Beschichtungen und beschichtete Substrate für Textilien oder Gewebe, die unter Verwendung der oben beschriebenen Haftvermittler-Zubereitungen erhältlich sind. Die erfindungsgemäßen Zubereitungen eignen sich als Haftvermittler für Beschichtungen auf Basis von weichgemachtem PVC, insbesondere zur Herstellung von Planen, Billboards, Traglufthallen und anderen textilen Bauten, flexiblen Behältern, Zeltdächern, Markisen, Schutzbekleidungen, Förderbändern, Flockteppichen oder Schaumkunstleder. Besonders gut geeignet sind die erfindungsgemäßen Zubereitungen als haftvermittelnde Zusatzmittel bei der Beschichtung von Substraten mit gegenüber Isocyanatgruppen reaktionsfähigen Gruppen, insbesondere bei der Beschichtung von Garnen, Matten und Geweben aus Polyester- oder Polyamidfasern.

Anhand der nachfolgenden Beispiele wird die Erfindung näher erläutert, ohne dass dadurch eine Einschränkung der Erfindung bewirkt werden soll.

Sofern nicht anders vermerkt, beziehen sich alle Teile und Prozentangaben auf das Gewicht.

Als Kenndaten der Produkte wurden der Festkörpergehalt (Dickschichtmethode: Deckel, 1 g Probe, 1 h 125°C Konvektionsofen, Grundlage DIN EN ISO 3251), die Viskosität bei 23°C (Rotationsviskosimeter VT550 der Fa. Haake GmbH, Karlsruhe) sowie der Gehalt an freiem TDI (Gaschromatographie, Hewlett Pack-ard 5890 nach DIN ISO 55956) bestimmt. Die Bestimmung des Isocyanatgehaltes erfolgte nach EN ISO 11909.

### Ausgangsstoffe

Desmodur® T80: TDI-Isomerengemisch aus 80 Gew.-% 2,4-TDI und 20 Gew.-% 2,6-TDI, Bayer Material Science AG.

Vestinol® 9 DINP: Diisononylphthalat, Oxeno GmbH.

Vestinol® INB, Isononylbenzoat, Evonik.

Benzoflex® 2088: Mischung aus Diethylenglycoldibenzoat, Triethylenglycoldibenzoat und Dipropylenglycoldibenzoat, Velsicol Chemical Corp

Unimoll® AGF, Acetyliertes Glycerinacetat, Lanxess Deutschland GmbH

Mesamoll® II: Alkansulfonsäurephenolester mit ≤ 0,25 Gew.-% flüchtigen paraffinischen Verbindungen, Lanxess Deutschland GmbH.

Katalysator-Herstellung: (analog nach DE 24 52 532 A1): 94 Gewichtsteile Phenol wurden mit 692 Teilen einer 25%igen wässrigen Dimethylamin-Lösung und 408 Gewichtsteilen einer 40%-igen wässrigen Formaldehyd-Lösung für zwei Stunden auf 80°C erhitzt. Nach Erkalten wurde die organische Phase abgetrennt und bei 90°C und 15 mbar eingedampft. Der Rückstand wurde in Xyol gelöst und auf eine Mannich-Basen-Konzentration von 80% eingestellt. Die Mengenangaben in den folgenden Beispielen beziehen sich auf diese Katalysatorlösung.

### Vergleichsbeispiel 1 (nicht erfindungsgemäß)

180 Teile Desmodur® T80 wurden bei 50°C in 504 Teilen Vestinol® 9 DINP mit 2,9 Teilen der Katalysatorlösung trimerisiert. Nach 84 Stunden wurde die Reaktion durch Zugabe von 4,7 Teilen Toluolsulfonsäuremethylester unterbrochen und bei 60 bis 70°C drei Stunden nachgerührt. Es wurde eine klare Lösung mit einem Isocyanatgehalt von 4,7%, einer Viskosität bei 23°C von 5.700 mPas und einem Gehalt an freiem TDI von 0,16% erhalten.

### Vergleichsbeispiel 2 (nicht erfindungsgemäß)

180 Teile Desmodur® T80 wurden bei 55°C in 378 Teilen Vestinol® 9 DINP mit 1,6 Teilen der Katalysatorlösung trimerisiert. Nach 72 Stunden wurde die Reaktion durch Zugabe von 2,6 Teilen Toluolsulfonsäuremethylester unterbrochen und bei 60 bis 70°C drei Stunden nachgerührt. Es wurde eine klare Lösung mit einem Isocyanatgehalt von 5,53%, einer Viskosität bei 23°C von 41.400 mPas und einem Gehalt an freiem TDI von 0,14% erhalten.

### Vergleichsbeispiel 3 (nicht erfindungsgemäß)

180 Teile Desmodur® T80 wurden bei 50°C in 415 Teilen in Benzoflex® 2088 mit 0,7 Teilen der Katalysatorlösung trimerisiert. Nach 84 Stunden wurde die Reaktion durch Zugabe von 1,7 Teilen Toluolsulfonsäuremethylester unterbrochen und bei 60 bis 70°C drei Stunden nachgerührt. Es wurde eine klare Lösung mit einem Isocyanatgehalt von 4,8%, einer Viskosität bei 23°C von > 200.000 mPas und einem Gehalt an freiem TDI von 1.09% erhalten.

### Vergleichsbeispiel 4 (nicht erfindungsgemäß)

180 Teile Desmodur® T80 wurden bei 55°C in 504 Teilen Mesamoll® II mit 2,9 Teilen der Katalysatorlösung trimerisiert. Nach 72 Stunden wurde die Reaktion durch Zugabe von 4,7 Teilen Toluolsulfonsäuremethylester unterbrochen und bei 60 bis 70°C drei Stunden nachgerührt. Es wurde eine klare Lösung mit einem Isocyanatgehalt von 4,8%, einer Viskosität bei 23°C von 11.600 mPas und einem Gehalt an freiem TDI von 0,25% erhalten.

### Vergleichsbeispiel 5 (nicht erfindungsgemäß)

180 Teile Desmodur® T80 wurden bei 55°C in 378 Teilen Mesamoll® II mit 1,5 Teilen der Katalysatorlösung trimerisiert. Nach 72 Stunden wurde die Reaktion durch Zugabe von 2,6 Teilen Toluolsulfonsäuremethylester unterbrochen und bei 60 bis 70°C drei Stunden nachgerührt. Es wurde eine klare Lösung mit einem Isocyanatgehalt von 5,31%, einer Viskosität bei 23°C von > 300.000 mPas und einem Gehalt an freiem TDI von 0,15% erhalten.

### Vergleichsbeispiel 6 (nicht erfindungsgemäß)

180 Teile Desmodur® T80 wurden bei 55°C in 378 Teilen Unimoll^{®} AGF mit 1,5 Teilen der Katalysatorlösung trimerisiert. Nach 72 Stunden wurde die Reaktion durch Zugabe von 2,6 Teilen Toluolsulfonsäuremethylester unterbrochen und bei 60 bis 70°C drei Stunden nachgerührt. Es wurde eine klare Lösung mit einem Isocyanatgehalt von 4,9%, einer Viskosität bei 23°C von > 35.400 mPas und einem Gehalt an freiem TDI von 0,42% erhalten.

Vergleichsbeispiel 1 entspricht Beispiel 2 aus EP 1 711 546 A1 und dient dazu, die Eigenschaften der erfindungsgemäßen Haftvermittler-Zubereitungen mit dem Stand der Technik vergleichen zu können. Vergleichsbeispiel 2 zeigt, dass die Erhöhung des TDI-Trimergehaltes auf ca. 32% bei Verwendung eines nicht erfindungsgemäßen Weichmachers zu einer prohibitiven Viskositätserhöhung führt. Wie die nicht erfindungsgemäßen Vergleichsbeispiele 1 bis 6 weiterhin zeigen, hat die Auswahl des Lösemittels einen entscheidenden Einfluss auf das Ergebnis der Trimerisation. So kann die gewünschte Eigenschaftskombination durch Verwendung der im Stand der Technik beschriebenen phthalatfreien Weichmacher nicht bzw. nur erreicht werden, wenn die TDI-Trimer-Konzentration ca. 27% nicht überschreitet. Die Haftvermittler können entweder aufgrund ihrer hohen Viskosität nicht mehr verarbeitet werden bzw. ergeben wegen ihrer zu geringen TDI-Trimer-Konzentration zu geringe Haftfestigkeiten. (s.u.).

### Beispiel 1 (erfindungsgemäß)

180 Teile Desmodur® T80 wurden bei 55°C in 378 Teilen Vestinoll® INB mit 1,5 Teilen der Katalysatorlösung trimerisiert. Nach 72 Stunden wurde die Reaktion durch Zugabe von 2,6 Teilen Toluolsulfonsäuremethylester unterbrochen und bei 60 bis 70°C drei Stunden nachgerührt. Es wurde eine klare Lösung mit einem Isocyanatgehalt von 5,43%, einer Viskosität bei 23°C von 11.040 mPas und einem Gehalt an freiem TDI von 0,31% erhalten.

### Anwendungstechnische Prüfung und Prüfergebnisse:

In einem praxisnahen Prüfsystem wurde Polyestergewebe mit einer PVC-Plastisol/Haftvermittlerbeschichtung versehen. Die Haftfestigkeit dieser Beschichtung wurde anschließend an einem normierten Teststreifen bestimmt. Dazu wurden mit einem Rakel Polyestergewebe mit einem haftvermittlerhaltigen Haftstrich und einer haftvermittlerfreien Deckstrichen mit ansonsten gleicher Zusammensetzung versehen. Diese Beschichtungen wurden in einem Thermoofen geliert und der weiteren Prüfung zugeführt. Bei der Prüfung der Haftfestigkeit wurden zwei Teststreifen (PVC Seite auf PVC Seite) übereinander gelegt, bei niedrigem Druck verpresset und mittels einer Zugmaschine geprüft.

### Prüfeinrichtungen:

Waage: Genauigkeit min. 0,1 g

Rührer: hochtouriger Stabrührer

Mathisofen Labcoater der Firma Mathis AG Zürich

Zugmaschine Ametec LR5 K plus

Polyester-Gewebe: Polyester 1100 dtex L 9/9 Z 60 Standardgewebe

Für die Prüfung wurden ca. 40 × 25 cm große Gewebeproben verwendet.

### Zusammensetzung des PVC-Plastisols:

70 T Pasten PVC; Vestolit® B 7021 Ultra; Vestolit GmbH; Marl
30 T Pasten PVC Vestolit ® E 7031 ; Vestolit GmbH; Marl
33 T ASEP Weichmacher Mesamoll ®; Lanxess Deutschland GmbH
33 T DINP Weichmacher Vestinol ® 9; Evonik Oxeno GmbH, Marl
10 T Kreide Durcal ® 5; Omya GmbH; Köln
2,5 T Stabilisator Mark ® BZ 513; Crompton Vinyl Additives GmbH; Lampertheim
1,5 T Titandioxid Kronos ® 2220; Kronos Titan GmbH; Leverkusen
(T= Teile)

### Prüfkörper:

| | | |
|---|---|---|
| 1. Haftstrich | ca. 120 g/m² | 140°C / 2 min |
| 2. Deckstrich | ca. 120 g/m² | 140°C / 2 min |

Die Prüfkörper wurden bei 180°C für 2 min verpresst und verschweißt.

Dimension: 5 cm Breite x 25 cm Länge) in Fadenschussrichtung

Prüfung mit Zugmaschine Ametec LR5 K plus

Zur Herstellung des PVC-Plastisols wurden die in im Kapitel "Zusammensetzung des PVC-Plastisols" aufgeführten Ausgangsstoffe in einem Mischer der Firma Drais durch Rühren für 2,5 Stunden bei höchster Drehzahl, unter Wasserkühlung und im Vakuum vermischt.

### Haftstrich:

Anhand dieser Proben wurden dann die Haftfestigkeiten mittels einer Zugmaschine, Typ Lloyd M 5 K, bestimmt. Die erhaltenen Haftfestigkeitswerte geben die Kraft in Newton an, die notwendig ist, um 10 cm der Beschichtung vom Trägergewebe abzulösen (Schältest). Die in der Tabelle angegebenen Werte wurden durch Mittelung von mindestens drei Einzelmessungen erhalten.

Wie die Messergebnisse zu den Beispielen 1 und 2 zeigen, liefert die Verwendung der erfindungsgemäßen phthalatfreien Haftvermitteler-Zubereitungen höhere Haftfestigkeitswerte, als sie mit der phthalathaltigen Haftvermitteler-Zubereitung aus dem Stand der Technik (Vergleichsbeispiel 1 und 2) erreicht werden. Die Haftvermittler aus den Vergleichsbeispielen 2,3, 5 und 6 eigneten sich nicht zur Weiterverarbeitung, da diese entweder zu hochviskos waren (Vergleichsbeispiel 3 und 5)oder zu schwer zu verarbeiten waren (Vergleichsbeispiele 2 und 6) und bei allen so auch Vergleichsbeispiel 4, die Haftung unzureichend war, um homogene Beschichtungen zu erhalten.

### Prüfergebnisse:

| **Beispiel** | | **Viskosität** | **Wirksamkeit** |
|---|---|---|---|
| Vergleichsbeispiel 1 | nicht erfindungsgemäß | 5.700 mPas | 153 |
| Vergleichsbeispiel 2 | nicht erfindungsgemäß | 41.400 mPas | 156 |
| Vergleichsbeispiel 3 | nicht erfindungsgemäß | > 200.000 mPas | Nicht prüfbar |
| Vergleichsbeispiel 4 | nicht erfindungsgemäß | 11.600 mPas | 137 |
| Vergleichsbeispiel 5 | nicht erfindungsgemäß | > 300.000 mPas | Nicht prüfbar |
| Vergleichsbeispiel 6 | nicht erfindungsgemäß | > 35.000 mPas | 133 |
| Beispiel 1 | erfindungsgemäß | 11.000 mPas | 180 |

## Patentansprüche

1. Zubereitungen, **dadurch gekennzeichnet, dass** diese
A) 15 bis 50 Gew.-% isocyanatgruppenhaltige Isocyanurate,
B) 85 bis 50 Gew.-% n- oder iso- Alkylbenzoate und
C) 0,01 bis 2 Gew.-% Mannich-Basen
enthalten.

2. Zubereitungen nach Anspruch 1, **dadurch gekennzeichnet, dass** sie 20 bis 35 Gew.-% isocyanatgruppenhaltige Isocyanurate und 80 bis 65 Gew.-% n- oder iso- Nonylbenzoate enthalten.

3. Zubereitungen nach einem der Ansprüche 1 oder 2, **dadurch gekennzeichnet, dass** die isocyanatgruppenhaltigen Isocyanurate aus einer Mischung von isomerer Diisocyanatotoluole enthaltend 65 bis 95 Gew.-% 2,4-Diisocyanatotoluol und 5 bis 35 Gew.-% 2,6-Diisocyanatotoluol unter Katalyse durch Dialkylaminogruppen enthaltende phenolische Katalysatoren und in Abwesenheit aliphatischer Hydroxyl- und/oder Urethangruppen hergestellt werden.

4. Zubereitungen nach mindestens einem der Ansprüche 1 bis 3, **dadurch gekennzeichnet, dass** die n- oder iso Alkylbenzoate > 90 Gew.% n- oder iso-Nonylbenzoat enthalten.

5. Verwendung von Zubereitungen gemäß einem der Ansprüche 1 bis 4 als Haftvermittler für Beschichtungsmittel auf Basis von weichgemachtem Polyvinylchlorid.

6. Verwendung gemäß Anspruch 5, **dadurch gekennzeichnet dass** die Beschichtungsmittel zur Herstellung von Substraten eingesetzt werden.

7. Verwendung gemäß Anspruch 6, **dadurch gekennzeichnet, dass** die beschichteten Substrate als Planen, Billboards, Traglufthallen und anderen textilen Bauten, flexiblen Behältern, Zeltdächern, Markisen, Schutzbekleidungen, Förderbändern, Flockteppichen oder Schaumkunstleder eingesetzt werden.

8. Verwendung gemäß der Ansprüche 5 bis 7, **dadurch gekennzeichnet, dass** die Substrate ein Grundgerüst auf Basis von Textilien oder Geweben haben.

9. Verwendung gemäß Anspruch 8, **dadurch gekennzeichnet, dass** es sich bei den Geweben um textile Polyester- oder Polyamidgewebe handelt.

10. Verfahren zur Herstellung der Zubereitungen gemäß der Ansprüche 1 bis 4, **dadurch gekennzeichnet, dass** man die Trimerisierung der Komponente A) in Gegenwart der Weichmacherkomponente B) und in Anwesenheit wenigstens einer als Katalysator fungierenden Mannich-Base im Temperaturbereich von 40 bis 140°C durchführt und sobald der Gehalt an freiem TDI in der Reaktionsmischung unter 1,0 Gew liegt, die Trimerisierung durch thermische Zersetzung des Katalysators oder durch Zugabe eines Katalysatorengifts abgebrochen wird.

## Claims

1. Preparations **characterized in that** they comprise
A) from 15 to 50% by weight isocyanurates comprising isocyanate groups,
B) from 85 to 50% by weight of n- or isoalkyl benzoates, and
C) from 0.01 to 2% by weight of Mannich bases.

2. Preparations according to Claim 1, **characterized in that** they comprise from 20 to 35% by weight of isocyanurates comprising isocyanate groups and from 80 to 65% by weight of n- or isononyl benzoates.

3. Preparations according to Claim 1 or 2, **characterized in that** the isocyanurates comprising isocyanate groups are produced from a mixture of isomeric diisocyanatotoluenes comprising from 65 to 95% by weight of 2,4-diisocyanatotoluene and from 5 to 35% by weight of 2,6-diisocyanatotoluene with catalysis by phenolic catalysts comprising dialkylamino groups and in the absence of aliphatic hydroxy and/or aliphatic urethane groups.

4. Preparations according to at least one of Claims 1 to 3, **characterized in that** the n- or isoalkyl benzoates comprise > 90% by weight of n- or isononyl benzoate.

5. Use of preparations according to any of Claims 1 to 4 as adhesion promoters for coating compositions based on plasticized polyvinyl chloride.

6. Use according to Claim 5, **characterized in that** the coating compositions are used for producing substrates.

7. Use according to Claim 6, **characterized in that** the coated substrates are used as tarpaulins, billboards, air-supported structures and other textile buildings, flexible containers, polygonal roofs, awnings, protective apparel, conveyor belts, flock carpets or foamed synthetic leather.

8. Use according to Claim 5 to 7, **characterized in that** the substrates have an underlying structure based on textiles or fabrics.

9. Use according to Claim 8, **characterized in that** the fabrics are textile polyester fabrics or textile polyamide fabrics.

10. Process for producing the preparations according to Claims 1 to 4, **characterized in that** the trimerization of component A) takes place in the temperature range from 40 to 140°C in the presence of plasticizer component B) and the presence of at least one Mannich base functioning as catalyst, and as soon as the content of free TDI in the reaction mixture is below 1.0 by weight the trimerization is terminated through thermal decomposition of the catalyst or through addition of a catalyst poison.

## Revendications

1. Préparations, **caractérisées en ce qu'**elles contiennent
A) 15 à 50 % en poids d'isocyanurates contenant des groupes isocyanate,
B) 85 à 50 % en poids de benzoates de n- ou isoalkyle
et
C) 0,01 à 2 % en poids de bases de Mannich.

2. Préparations selon la revendication 1, **caractérisées en ce qu'**elles contiennent de 20 à 35 % en poids d'isocyanurates contenant des groupes isocyanate et de 80 à 65 % en poids de benzoates de n-ou isononyle

3. Préparations selon la revendication 1 ou 2, **caractérisées en ce que** les isocyanurates contenant des groupes isocyanate sont préparés à partir d'un mélange de diisocyanatotoluènes isomères contenant 65 à 95 % en poids de 2,4-diisocyanatotoluène et 5 à 35 % en poids de 2,6-diisocyanatotoluène avec catalyse par des catalyseurs phénoliques contenant des groupes dialkylamino et en absence de groupes uréthane et/ou hydroxy aliphatiques.

4. Préparations selon au moins l'une quelconque des revendications 1 à 3, **caractérisées en ce que** les benzoates de n- ou isoalkyle contiennent > 90 % en poids de benzoate de n- ou isononyle.

5. Utilisation de préparations selon l'une quelconque des revendications 1 à 4, en tant que promoteur d'adhérence pour des produits de revêtement à base de poly(chlorure de vinyle) plastifié.

6. Utilisation selon la revendication 5, **caractérisée en ce que** les produits de revêtement sont utilisés pour la fabrication de supports.

7. Utilisation selon la revendication 6, **caractérisée en ce que** les supports revêtus sont utilisés en tant que plans, panneaux d'affichage, chapiteaux gonflables et autres constructions textiles, récipients flexibles, toits de tentes, stores, vêtements protecteurs, bandes transporteuses, moquettes floquées ou similicuir expansé.

8. Utilisation selon les revendications 5 à 7, **caractérisée en ce que** les supports ont une structure de base à base de textiles ou de tissus.

9. Utilisation selon la revendication 8, **caractérisée en ce que** les tissus consistent en des tissus de polyester ou polyamide textiles.

10. Procédé pour la production des préparations selon les revendications 1 à 4, **caractérisé en ce qu'**on effectue la trimérisation du composant A) en présence du composant plastifiant B) et en présence d'au moins une base de Mannich fonctionnant comme catalyseur, dans la plage de température de 40 à 140 °C et dès que la teneur en TDI libre du mélange réactionnel est inférieure à 1,0 % en poids, on interrompt la trimérisation par décomposition thermique du catalyseur ou par addition d'un poison de catalyseur.
